(19) Europäisches Patentamt / European Patent Office / Office européen des brevets

(11) **EP 3 591 992 A1**

(12) **EUROPEAN PATENT APPLICATION**

(43) Date of publication:
08.01.2020 Bulletin 2020/02

(51) Int Cl.:
*H04R 1/28* (2006.01)　　　*H04N 13/30* (2018.01)
*H04N 5/253* (2006.01)　　*H04N 17/00* (2006.01)
*H04R 1/10* (2006.01)　　　*H04R 5/033* (2006.01)
*H04N 5/225* (2006.01)

(21) Application number: 18204847.0

(22) Date of filing: 07.11.2018

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 04.07.2018　CN 201821059614 U

(71) Applicant: **Sysmax Innovations Co., Ltd.**
**510623 Guangzhou, Guangdong (CN)**

(72) Inventor: **LI, Wenjie**
**Guangzhou, Guangdong 510623 (CN)**

(74) Representative: **Zaboliene, Reda**
**METIDA Law Firm Zaboliene and Partners**
**Business center VERTAS**
**Gyneju 16**
**01109 Vilnius (LT)**

(54) **EARPHONE**

(57) An earphone is disclosed. The earphone includes two earpiece main bodies, two MIPI cameras, an MIPI driver and a processor. The two MIPI cameras are respectively disposed on the two earpiece main bodies and located on the sides facing away from a wearer. The processor is connected to MIPI interfaces of the two MIPI cameras through the MIPI driver, and acquires images photographed by the two MIPI cameras.

Fig.1

EP 3 591 992 A1

## Description

CROSS-REFERENCE TO RELATED APPLICATIONS

This application claims priority to Chinese Application No. CN201821059614.7 having a filing date of July 4, 2018, the entire contents of which are hereby incorporated by reference.

FIELD OF TECHNOLOGY

The following relates to the field of electronic technology, in particular, to an earphone.

BACKGROUND

With the development of information technology, VR (Virtual Reality) technology, as a computer simulation system that can be used to create and experience virtual worlds, has spread rapidly in various fields including videos, games, pictures, and shopping.

Panoramic images and panoramic videos are important parts of VR contents, and they are stitched by generation tools corresponding thereto such as panoramic cameras to obtain pictures with large fields of view, so that viewers have more realistic experience for the various view angles at which the pictures or videos are photographed. However, the panoramic camera products currently available on the market are relatively large in size and not convenient to carry, or require deliberately holding a device for taking panoramic photos, which is not convenient.

Portable or small-size glasses or Bluetooth earphones with a photographic function for example have only one camera. As the field of view of the one camera is sure not large, it cannot provide content at a sufficient angle for the viewer to get realistic experience. Moreover, few people are willing to wear an electronic product with one camera to perform photographing in their daily life, and people around will feel strange. Therefore, how to achieve photography at a large field of view without affecting the daily life has become an urgent problem to be solved.

SUMMARY

Based on this, an objective of the present invention is to provide an earphone which has the advantage of conveniently photographing at a relatively large field of view without affecting the daily life.

The earphone includes two earpiece main bodies, two MIPI cameras, an MIPI driver and a processor, wherein the two MIPI cameras are respectively disposed on the two earpiece main bodies and located on the sides facing away from a wearer; and the processor is connected to MIPI interfaces of the two MIPI cameras through the MIPI driver, and acquires images photographed by the two MIPI cameras.

Compared with the prior art, the present invention has the two MIPI cameras provided on the two earpiece main bodies, so that photographing at a large field of view can be achieved conveniently without affecting the daily life of the user. Further, the MIPI cameras and the MIPI driver are used to achieve the MIPI interface communication between the cameras and the processor, so that the transmission bandwidth can reach 10 Gb/s or more, and the camera resolution can reach 10 million levels or more, thereby improving the amount of transmitted data, achieving transmission of high-resolution pictures, reducing the power consumption, and improving the transmission efficiency.

Further, two speakers are disposed on the sides of the two earpiece main bodies close to the wearer respectively; and the two speakers are both connected to the processor.

Further, two microphones are further disposed on the two earpiece main bodies respectively; and the two microphones are both connected to the processor.

Further, two acceleration sensors are further included; and the two acceleration sensors are both connected to the processor and transmit acquired human body motion information to the processor.

Further, two positioning devices are embedded in the two earpiece main bodies; and the two positioning devices are connected to the processor and transmit positioning information to the processor.

Further, an earphone cord is further included; the two MIPI cameras are both connected to the processor via the earphone cord and the MIPI driver; and the two speakers and/or the two microphones and/or the two acceleration sensors and/or the two positioning devices are all connected to the processor via the earphone cord.

Further, the two earpiece main bodies are a left earpiece main body disposed on a left ear side of the wearer, and a right earpiece main body disposed on a right ear side of the wearer; and the two MIPI cameras are a left MIPI camera disposed on the left earpiece body on a side facing away from the wearer's left ear, and a right MIPI camera disposed on the right earpiece body on a side facing away from the wearer's right ear; the left MIPI camera and the right MIPI camera are wide angle cameras with a field of view of 120-220 degrees to obtain a wide angle picture through the left MIPI camera and the right MIPI camera.

Further, the two positioning devices are a left gyroscope embedded on the left earpiece main body and a right gyroscope embedded on the right earpiece main body; and the positioning information is the attitude angle of the left gyroscope and the attitude angle of the right gyroscope to obtain the positions of the two MIPI cameras.

Further, one or more buttons are further included which are embedded on the surface of the processor and connected to the processor; and the buttons are connected to the processor and used to control photographing operations of the two MIPI cameras so as to conveniently photograph images.

Further, a back-end processing platform and a USB communication device are also included; and the back-end processing platform is connected to the processor through the USB communication device, and acquires the images photographed by the two MIPI cameras transmitted by the processor.

For the sake of better understanding and implementation, the present invention is described in detail below in conjunction with the accompanying drawings.

BRIEF DESCRIPTION OF THE DRAWINGS

Fig. 1 is a structure diagram of an earphone system in one or more embodiments of the present invention;
Fig. 2 is a schematic block diagram of the earphone system in one or more embodiments of the present invention;
Fig. 3 shows photographic areas of the earphone system in one or more embodiments of the present invention;
Fig. 4 shows arrangement positions of the earphone system in one or more embodiments of the present invention;
Fig. 5 is a position coordinate diagram of a human body wearing the earphone system in one or more embodiments of the present invention;
Fig 6 is a schematic diagram of overlapped areas photographed by a left MIPI camera and a right MIPI camera;
Fig. 7 is a schematic diagram of a left image and a right image; and
Fig. 8 is a schematic diagram of a left image, a right image, and a stitched image in one embodiment.

DETAILED DESCRIPTION

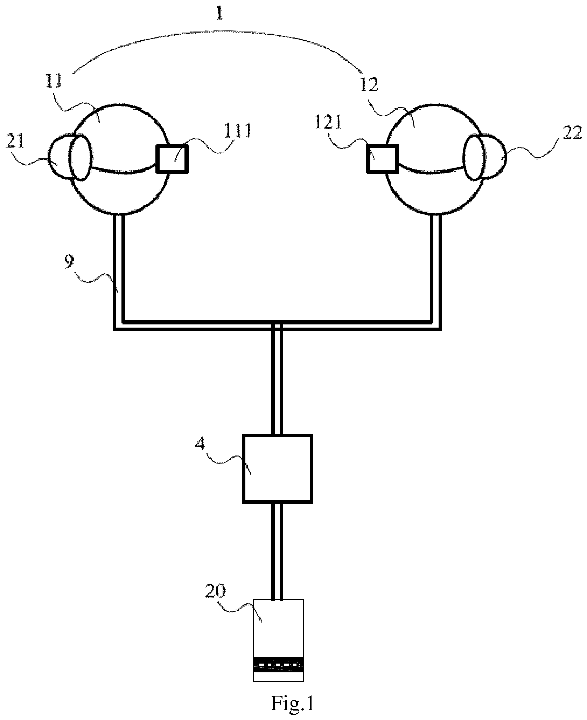

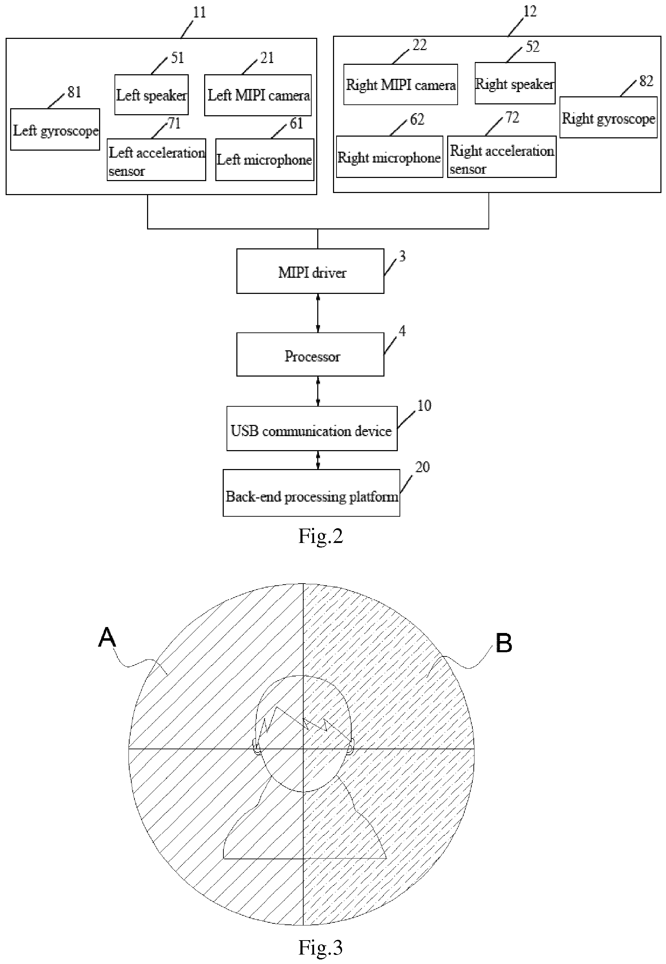

Referring to both Figs. 1 and 2, Fig. 1 is a structure diagram of an earphone system in one or more embodiments of the present invention; and Fig. 2 is a schematic block diagram of the earphone system in one or more embodiments of the present invention. The earphone system provided in the embodiment includes an earphone, the earphone including two earpiece main bodies 1, two MIPI cameras, an MIPI driver 3, and a processor 4. The two MIPI (Mobile Industry Processor Interface) cameras 2 are respectively disposed on the two earpiece main bodies 1 and located on the sides facing away from a wearer; and the processor 4 is connected to MIPI interfaces of the two MIPI cameras through the MIPI driver 3, and acquires images photographed by the two MIPI cameras. Further, by adopting the MIPI interface communication, the amount of transmitted data is increased, to transmit high-resolution pictures, reduce the power consumption, and improve the transmission efficiency.

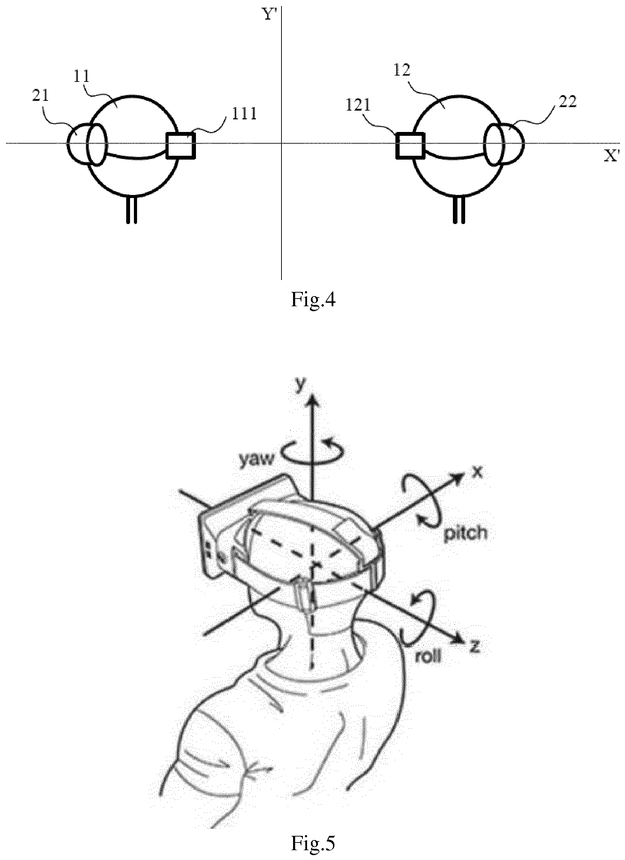

Referring to both Figs. 3 and 4, Fig. 3 shows photographic areas of the earphone system in one or more embodiments of the present invention; and Fig. 4 shows arrangement positions of the earphone system in one or more embodiments of the present invention. The two earpiece main bodies 1 are a left earpiece main body 11 disposed on a left ear side of the wearer, and a right earpiece main body 12 disposed on a right ear side of the wearer. The two MIPI cameras are a left MIPI camera 21 disposed on the left earpiece body 11 on a side facing away from the wearer's left ear, and a right MIPI camera 22 disposed on the right earpiece body 12 on a side facing away from the wearer's right ear. Specifically, a left play port 111 is provided on a side of the left earpiece main body 11 facing the left ear, and the left MIPI camera 21 is provided on a side of the left earpiece main body 11 opposite to the left play port 111, and the field of view of the left MIPI camera 21 is 120-220 degrees. Preferably, the left MIPI camera 21 is an ultra wide-angle camera lens with a field of view of 180 degrees or higher, for photographing static or moving images (i.e. videos) within the field of view of at least 180 degrees on the left side of the wearer (area A shown in Fig. 3). A right playing port is provided on a side of the right earpiece main body 12 facing the right ear, and the right MIPI camera 22 is provided on a side of the right earpiece main body 12 opposite to the right playing port 121, and the field of view of the right MIPI camera 21 is 120-220 degrees. Preferably, the right MIPI camera 22 is an ultra wide-angle camera lens with a field of view of 180 degrees or higher, for photographing static or moving images (i.e. videos) within the field of view of at least 180 degrees on the right side of the wearer (area B shown in Fig. 3).

In an embodiment of the present invention, the ultra wide-angle camera lenses of the left MIPI camera 21 and the right MIPI camera 22 are fish-eye camera lenses, which use fish-eye lenses as lenses thereof. In the embodiment, after the user wears the earphone, if the direction in which the human eyes are looking straight ahead is defined as an optical axis Y, and a connecting line of the left MIPI camera 21 and the right MIPI camera 22 is an axis X, then the connecting line X of the left MIPI camera 21 and the right MIPI camera 22 is perpendicular to the optical axis of the human eyes, that is, the mounting direction of the left MIPI camera 21 and the right MIPI camera 22 is perpendicular to the user's eyes, i.e. the optical axis of the left camera and the optical axis of the right camera are perpendicular (including substantially perpendicular) to the optical axis of the human eyes. Preferably, the connecting line of the left MIPI camera 21 and the right MIPI camera 22 is in parallel or coincides with the connecting line of the user's left ear hole and right ear hole. Static or moving images within the field of view of at least 180 degrees in the region A on the left side of the wearer can be photographed by the left fish-eye lens, and static or moving images within the field of view of at least 180 degrees in the region B on the right side of the wearer can be photographed by the right fish-eye lens. After the image data photographed by the left MIPI camera 21 and the right MIPI camera 22 are stitched, a 360-degree panoramic image can be obtained.

In one embodiment, two speakers are disposed on the sides of the two earpiece main bodies 1 close to the wearer respectively; and the two speakers are configured to be both connected to the processor 4 and receive a control signal transmitted by the processor 4 to achieve playback of audios. The two speakers may be a left speaker 51 disposed at the left play port 111 in the left earpiece main body 11, and a right speaker 52 disposed at the right play port 121 in the right earpiece main body 12.

In one embodiment, two microphones are further disposed on the two earpiece main bodies 1 respectively; and the two microphones are both connected to the processor 4 and receive a control signal transmitted by the processor 4 to achieve on and off of the microphones as well as transmission of microphone audio signals. The two microphones are a left microphone 61 provided on the left earpiece main body 11, and a right microphone 62 provided on the right earpiece main body 12. Preferably, the left microphone 61 and the right microphone 62 can be symmetrically arranged, and providing the microphones on both sides of the earphone can provide a sound transmissive effect, and can achieve silencing to eliminate the background sound. The user wearing an ordinary earphone may not easily hear the outside sound, and if the microphones are added to the left earpiece main body and the right earpiece main body 12, the sound collected by the microphones can be directly transmitted to the ears, thereby achieving an environmental sound transmissive effect and eliminating the background sound.

In an embodiment, the two earpiece main bodies 1 are further provided with two acceleration sensors respectively, the two acceleration sensors being connected to the processor 4 and transmitting detected signals to the processor 4. The two acceleration sensors are a left acceleration sensor 71 provided on the left earpiece main body 11, and a right acceleration sensor 72 provided on the right earpiece main body 12 to acquire a motion state, such as a sitting or walking or running state, of the human head through the left acceleration sensor 71 and the right acceleration sensor 72.

In one embodiment, one or more buttons are further included which are embedded on the surface of the processor 4 and connected to the processor 4; such as buttons for controlling the speakers to start, pause or adjust the volume of audio playback or answer calls, etc. In another embodiment, the buttons further include a button for controlling the on and volume adjustment of at least one microphone on the earphone. In yet another embodiment, the buttons further include a button for controlling image photographing operations of the left MIPI camera 21 and the right MIPI camera 22. For example, pressing a specific button can start photographing images with the left MIPI camera 21 and the right MIPI camera 22, and pressing the button again can stop photographing images; and pressing and holding the specific button can start photographing a video with the left MIPI camera 21 and the right MIPI camera 22 and start the microphones for sound recording, and pressing and holding the button again can stop photographing the video. The example of the button control mode is not used to limit the present invention, and various other button control modes can also be set. For example, different buttons can be used to control different functions, or different pressing modes of a same button can be used to control different functions. In another embodiment of the present invention, some of the buttons may also be replaced by pulleys or sliders.

In one embodiment, the two earpiece bodies 1 are further provided with two positioning devices respectively; and the two positioning devices are connected to the processor 4 and transmit positioning information to the processor 4. The two positioning devices are a left gyroscope 81 embedded in the left earpiece main body 11 and a right gyroscope 82 embedded in the right earpiece main body 12. The positioning information is the attitude angle of the left gyroscope 81 and the attitude angle of the right gyroscope 82 to characterize the positions of the left MIPI camera 21 and the right MIPI camera 22 respectively. Please refer to Fig. 5, which is a position coordinate diagram of a human body wearing the earphone system in one or more embodiments of the present invention. In one embodiment, the information of the left gyroscope 81 and the right gyroscope 82 is the attitude angle $G_L$ of the left gyroscope 81 and the attitude angle $G_R$ of the right gyroscope 82 at present, which are three-dimensional vectors, the $G_L$ being ($L_{pitch}$, $L_{yaw}$, $L_{roll}$), and the $G_R$ being ($R_{pitch}$, $R_{yaw}$, $R_{roll}$), wherein a connecting line of the center of the left earpiece main body 11 and the center of the right earpiece main body 12 is defined as an X-axis direction, and the vertical direction is a Y-axis direction, and a direction perpendicular to the plane of the X-axis and the Y-axis is an Z-axis direction; and pitch, yaw, and roll represent rotation angles in the three directions of the X-axis, the Y-axis, and the Z-axis, respectively.

In one embodiment, an earphone cord 9 is further included; the two earpiece bodies 1 and the two MIPI cameras are all connected to the MIPI driver 3 via the earphone cord 9, and the two speakers, two microphones, the two positioning devices and the two acceleration sensors are all connected to the processor 4 via the earphone cord 9. MIPI interface lines, serial lines, audio lines, data lines and power lines are integrated in the earphone cord 9, and communication of the two earpiece main bodies 1, the two MIPI cameras, the two speakers, the two microphones, the two positioning devices and the two acceleration sensors with processor 4 is achieved by defining the routing of the lines in the earphone cord 9.

In one embodiment, the processor 4 also stitches the images photographed by the two MIPI cameras into an image that is wide-angle or even visually 360-degree, thereby obtaining a wide-angle or even panoramic image. A method of stitching by the processor 4 the images photographed by the two MIPI cameras to obtain a panoramic image will be specifically described below.

The method of stitching by the processor 4 the images photographed by the two MIPI cameras to obtain a panoramic image includes: the processor 4 acquiring the images photographed by the two MIPI cameras; removing areas of the images photographed by the two MIPI cameras that are blocked by the human face to obtain two effective images to be stitched; extracting feature points in the two effective images to be stitched, and registering the feature points of the two effective images to be stitched; unifying coordinate systems of the two effective images to be stitched according to the registered feature points to obtain an initial stitched panoramic image; finding a stitching seam in the initial stitched panoramic image and generating a mask image; and fusing the mask image and the initial stitched panoramic image to obtain a stitched panoramic image. The images photographed by the two MIPI cameras are a left image photographed by the left MIPI camera 21 and a right image photographed by the right MIPI camera 22.

In one embodiment, after acquiring the images photographed by the two MIPI cameras, the processor 4 further acquires the positioning information transmitted by two positioning devices, calculates the relative positions of the two MIPI cameras according to the positioning information, and searches a database according to the relative positions of the two MIPI cameras to determine whether stitching template data corresponding thereto is present, and if so, stitches the images photographed by the two MIPI cameras into the initial stitchedpanoramic image through the stitching template data stored in the database, acquires the mask image in the template data, and fuses the mask image and the initial stitched panoramic image to obtain the stitched panoramic image; and if there is no corresponding stitching template data, removes the areas in the images photographed by the two MIPI cameras that are blocked by the human face. The two positioning devices are a left gyroscope 81 embedded on the left earpiece main body 11 and a right gyroscope 82 embedded on the right earpiece main body 12. The positioning information is the attitude angle of the left gyroscope 81 and the attitude angle of the right gyroscope 82. The relative positions of the two MIPI cameras are calculated by subtracting the positioning information $G_L$ of the left gyroscope 81 from the positioning information $G_R$ of the right gyroscope 82 to obtain the relative positions D of the left MIPI camera and the right MIPI camera 22 that currently photograph the left and right images, specifically ($L_{pitch}$- $R_{pitch}$, $L_{yaw}$-$R_{yaw}$, $L_{roll}$-$R_{roll}$). The method of searching a database according to the relative positions of the two MIPI cameras to determine whether stitching template data corresponding thereto is present is: comparing the relative positions of the two MIPI cameras with stitching template data stored in the database to determine whether a piece of data indicates identical information to the relative positions of the two cameras, wherein if so, there is corresponding stitching template data; otherwise, there is no corresponding stitching template data. The stitching template data includes the relative positions of the two MIPI cameras and stitching parameters required for image stitching at the relative positions, the stitching parameters including removing positions for removing the areas in the images photographed by the two MIPI cameras blocked by the human face, a perspective projection matrix for unifying the coordinate systems of the two effective images to be stitched, and the mask image.

In one embodiment, the processor 4 removing areas of the images photographed by the two MIPI cameras that are blocked by the human face to obtain two effective images to be stitched includes: graying the left image and the right image respectively to obtain a grayed left image and right image; acquiring gradient values of the grayed left and right images at each pixel on each row respectively; sequentially calculating from right to left the sum of the gradient values of the grayed left image on each column, and determining whether the sum of the gradient values of each column is greater than a preset threshold; if it is greater than the preset threshold, using the column as a new left border, and selecting the image from the new left border to the right border of the left image as an effective left image to be stitched; if it is not greater than the preset threshold, moving left by one column, and continuing to calculate the sum of the gradient values of the next column; sequentially calculating from left to right the sum of the gradient values of the grayed right image on each column, and determining whether the sum of the gradient values of each column is greater than a preset threshold; if it is greater than the preset threshold, using the column as a new right border, and selecting the image from the new right border to the left border of the right image as an effective right image to be stitched; and if it is not greater than the preset threshold, moving right by one column, and continuing to calculate the sum of the gradient values of the next column.

The position from right to left is so defined that when facing the left image, the side corresponding to the left ear is the left side, and the side corresponding to the right ear is the right side. The position from left to right is so defined that when facing the right image, the side corresponding to the left ear is the left side, and the side corresponding to the right ear is the right side.

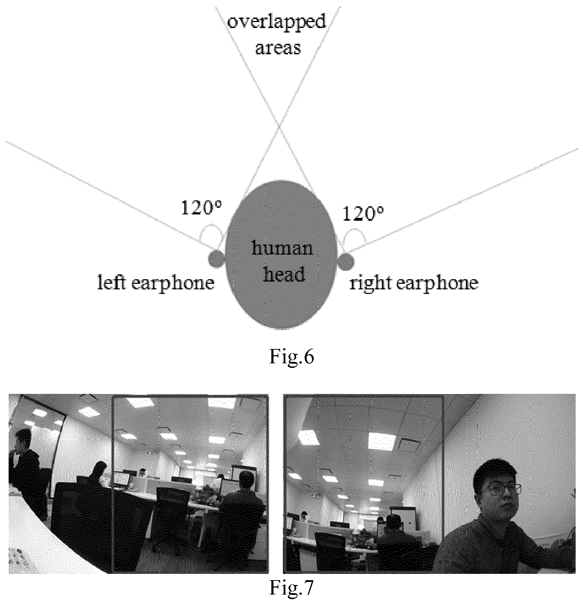

In one embodiment, to improve the stitching efficiency, after removing the areas blocked by the human face in the images photographed by the two MIPI cameras, the processor 4 further acquires overlapped areas in the left image and the right image respectively, the overlapped areas in the left image and the right image serving as the two effective images to be stitched. Acquiring the effective overlapped areas is: acquiring the same according to the relative positions of the left gyroscope 81 and the right gyroscope 82 and the fields of view of the left MIPI camera 21 and the right MIPI camera 22, through calibrated empirical values of starting positions of the fields of view and overlapped starting positions of the images. Specifically, referring to both Figs. 6 and 7, Fig. 6 is a schematic diagram of overlapped areas photographed by the left MIPI camera 21 and the right MIPI camera 22; and Fig. 7 is a schematic diagram of a left image and a right image. In the case where the relative positions and the fields of view of 120° of the left MIPI camera 21 and the right MIPI camera 22 are determined, the overlapped areas of the left image and the right image can be obtained at this relative angle by the pre-calibrated empirical values. Then correspondingly in the left and right images, they are the areas marked by the rectangular box in Fig. 7.

In one embodiment, using the SURF (Speeded Up Robust Features) algorithm, the ORB (Oriented FAST and Rotated BRIEF) algorithm or the SIFT (Scale-invariant feature transform) algorithm, feature points in the effective left image to be stitched and the effective right image to be stitched can be extracted respectively, and the feature points in the effective left image to be stitched and the effective right image to be stitched can be registered.

To further reduce the mismatch and improve the matching accuracy, in one embodiment, the RANSAC (Random Sample Consensus) algorithm is used to remove mismatched feature points in the effective left image to be stitched and the effective right image to be stitched.

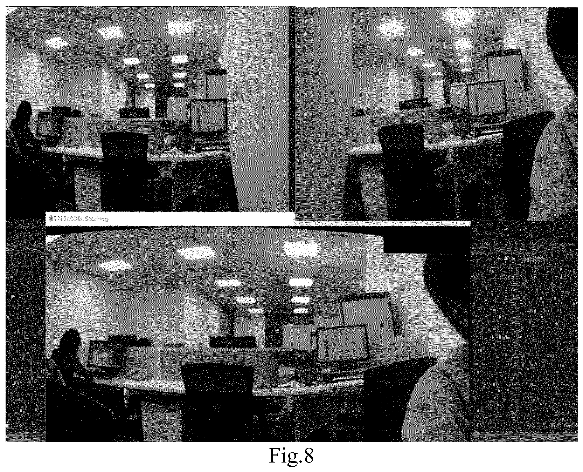

Referring to Fig. 8, which is a schematic diagram of a left image, a right image, and a stitched image in one embodiment, wherein the left image is on the upper left side of Fig. 8, the right image is on the upper right side, and the stitched image is on the lower side; and a white area on the right side of the left image is an area blocked by the left face, and a white area on the left side of the right image is an area blocked by the right face.

In one embodiment, the perspective projection matrix is solved and the left image to be stitched is projected into the right image to be stitched through perspective projection to unify the coordinate systems of the two effective images to be stitched, specifically including the following steps:

The paired left and right images can be represented by n sets of feature point coordinate pairs, specifically $(L_1(x_1, y_1), R_1(x_1', y_1'))$, $(L_2(x_2, y_2), R_2(x_2', y_2'))$, ... ,$(L_n(x_n, y_n), R_n(x_n', y_n'))$, wherein $(L_i, R_i)$ is a set of matching pair; $L_i$ and $R_i$ are each a two-dimensional coordinate; and x, y in $L_i$ represents the coordinate position of the feature point in the left image, and x', y' in $R_i$ represents the coordinate position of the feature point in the right image. By solving the homogeneous linear equation, it is possible to calculate a perspective projection matrix M such that R=M*L, where

$$M = \begin{bmatrix} m_{11} & m_{12} & m_{13} \\ m_{21} & m_{22} & m_{23} \\ m_{31} & m_{32} & 0 \end{bmatrix},$$ wherein the eight parameters of the perspective projection matrix M represent the amounts of rotation, size, and translation, that is, multiplying the perspective projection matrix M by the coordinate (x, y) of the feature point of the left image can get the coordinate (x', y') of the feature point on the right image. As there are 8 unknowns in the perspective projection matrix M, generally 8 sets of feature pairs can get a specific set of solutions, but in general, the number of feature point pairs will exceed this value, then the finally calculated parameters of M are such that $\sum_{i=1}^{n} \lVert R_i - M \cdot L_i \rVert$ is the smallest, where $R_i$ - $M \cdot L_i$ is an vector obtained by reducing a vector coordinate obtained by multiplying M by $L_i$ from the original R, and then the norm of the difference vector is calculated to get the length of the vector, that is, the final M is such that after all the feature points of the left image are transformed, and the difference between the converted feature points and all corresponding feature points of the right image reaches the minimum value, that is, the following formula reaches the minimum:

$$\sum_{i=1}^{n} \left\lVert \begin{bmatrix} x_i' \\ y_i' \\ 1 \end{bmatrix} - \begin{bmatrix} m_{11} & m_{12} & m_{13} \\ m_{21} & m_{22} & m_{23} \\ m_{31} & m_{32} & 0 \end{bmatrix} \cdot \begin{bmatrix} x_i \\ y_i \\ 1 \end{bmatrix} \right\rVert$$

Therefore, the perspective projection matrix M is multiplied by each point in the left image to obtain the position of each point on the left image in the final panoramic image with the right image as the standard, that is, the coordinate systems of the left and right images are unified, thus obtaining the panoramic image with a seam.

In another embodiment, the coordinate systems of the two effective images to be stitched can also be unified by solving the perspective projection matrix and projecting the right image to be stitched through perspective projection to the left image to be stitched.

To obtain a relatively complete image and prevent the stitching effect from being affected by the relatively large parallax, in one embodiment, the stitching seam is searched for in the initial stitched panoramic image by the maximum flow algorithm, and then a mask image is generated.

To conveniently and quickly stitch the left and right images photographed by the two MIPI cameras having identical relative positions, in one embodiment, the relative positions of the two MIPI cameras, the removing positions for removing the areas in the images photographed by the two MIPI cameras blocked by the human face, the perspective projection matrix for unifying the coordinate systems of the two effective images to be stitched, and the mask image are bound as the stitching template data and saved to the database, and then the stitching template data is directly invoked for seam stitching when the same relative positions of the two MIPI cameras are encountered.

In one embodiment, the mask image and the initial stitched panoramic image are fused by a fade-in and fade-out fusion method or a multi-band fusion method.

In one embodiment, the processor may be an image SOC chip, an AI chip, a GPU, an FPGA or the like.

In one embodiment, a USB communication device 10 and a back-end processing platform 20 are also included. The processor 4 is connected to the back-end processing platform 20 through the USB communication device 10, and the processor 4 also transmits the acquired images photographed by the two MIPI cameras and the positioning information transmitted by the two gyroscopes to the back-end processing platform 20; the back-end processing platform 20 implements the above-mentioned stitching of the images photographed by the two MIPI cameras to obtain a panoramic image; and the photographed images are processed by the processor in combination with the back-end processing platform to improve the processing efficiency. The back-end processing platform 20 can be a mobile phone, a tablet computer, a notebook computer, a desktop computer or the like.

In one embodiment, after the processor 4 acquires the images photographed by the MIPI cameras, it also determines whether the current processing speed and memory footprint are less than a preset threshold; if less than the preset threshold, the images photographed by the MIPI cameras are transmitted to the back-end processing platform 10, and the back-end processing platform 10 stitches the acquired images photographed by the MIPI cameras to obtain a panoramic image; and if not less than the preset threshold, the processor 4 stitches the acquired images photographed by the MIPI cameras to obtain a panoramic image.

Compared with the prior art, the present invention uses the MIPI cameras and the MIPI driver to achieve the MIPI interface communication between the cameras and the processor, so that the transmission bandwidth can reach 10 Gb/s or more, and the camera resolution can reach 10 million levels or more, thereby improving the amount of transmitted data, achieving transmission of high-resolution pictures, reducing the power consumption, and improving the transmission efficiency.

Further, the blocked areas in the images photographed by the two MIPI cameras are removed, and then the images are stitched to form a panoramic image, so that the stitched panoramic image is complete and good in effect, and can achieve the panoramic image vision exceeding the range of angles viewed by the human eyes. Moreover, based on the relative positions of the two MIPI cameras, when they are identical to the relative positions of the two MIPI cameras stored in the database, it does not need to re-determine the stitching parameters, and the parameters required for stitching are directly invoked for stitching, so that the stitching efficiency is greatly improved.

The foregoing embodiments only represent several implementations of the present invention, and are described concretely in detail, but should not be understood for this reason as limiting the patent scope of the present invention. It should be noted that for those of ordinary skill in the art, a number of modifications and improvements can be made without departing from the concept of the present invention, and all these modifications and improvements are encompassed within the protection scope of the present invention.

**Claims**

1. An earphone, comprising: two earpiece main bodies, two MIPI cameras, an MIPI driver and a processor; wherein the two MIPI cameras are respectively disposed on the two earpiece main bodies and located on the sides facing away from a wearer; and the processor is connected to MIPI interfaces of the two MIPI cameras through the MIPI driver, and acquires images photographed by the two MIPI cameras.

2. The earphone of claim 1, further comprising two speakers disposed on the sides of the two earpiece main bodies close to the wearer respectively; and the two speakers are both connected to the processor.

3. The earphone of claim 2, further comprising two microphones disposed on the two earpiece main bodies respectively; and the two microphones are both connected to the processor.

4. The earphone of claim 3, further comprising two acceleration sensors; and the two acceleration sensors are both connected to the processor and transmit acquired human body motion information to the processor.

5. The earphone of claim 4, further comprising two positioning devices embedded in the two earpiece main bodies; and the two positioning devices are connected to the processor and transmit positioning information to the processor.

6. The earphone of claim 5, further comprising an earphone cord; the two MIPI cameras are both connected to the processor via the earphone cord and the MIPI driver; and the two speakers and/or the two microphones and/or the two acceleration sensors and/or the two positioning devices are all connected to the processor via the earphone cord.

7. The earphone of claim 6, wherein the two earpiece main bodies are a left earpiece main body disposed on a left ear side of the wearer, and a right earpiece main body disposed on a right ear side of the wearer; and the two MIPI cameras are a left MIPI camera disposed on the left earpiece body on a side facing away from the wearer's left ear, and a right MIPI camera disposed on the right earpiece body on a side facing away from the wearer's right ear; the left MIPI camera and the right MIPI camera are wide angle cameras with a field of view of 120-220 degrees.

8. The earphone of claim 7, wherein the two positioning devices are a left gyroscope embedded on the left earpiece main body and a right gyroscope embedded on the right earpiece main body; and the positioning information is the attitude angle of the left gyroscope and the attitude angle of the right gyroscope.

9. The earphone of claim 1, further comprising one or more buttons embedded on the surface of the processor and connected to the processor; and the buttons are connected to the processor and used to control photographing operations of the two MIPI cameras.

10. The earphone of claim 2, further comprising a back-end processing platform and a USB communication device; and the back-end processing platform is connected to the processor through the USB communication device, and acquires the images photographed by the two MIPI cameras transmitted by the processor.

Fig.1

Fig.2

Fig.3

Fig.4

Fig.5

Fig.6

Fig.7

Fig.8

Europäisches
Patentamt

European
Patent Office

Office européen
des brevets

# EUROPEAN SEARCH REPORT

Application Number

EP 18 20 4847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 206 585 725 U (LI WENJIE) 24 October 2017 (2017-10-24) * the whole document * | 1-5,7 | INV. H04R1/28 H04N13/30 H04N5/253 H04N17/00 |
| Y | US 2016/123758 A1 (BENZAIA THOMAS P [US] ET AL) 5 May 2016 (2016-05-05) * paragraph [0011] - paragraph [0085]; figures 1-4 * | 1-10 | ADD. H04R1/10 H04R5/033 H04N5/225 |
| Y | US 2016/309134 A1 (VENKATARAMAN KARTIK [US] ET AL) 20 October 2016 (2016-10-20) * page 3, paragraph 72 - page 14, paragraph 141; figures 1B, 11 * | 1-10 | |
| A | US 2017/064456 A1 (BACKMAN JUHA [FI]) 2 March 2017 (2017-03-02) * page 1, paragraph 18 - page 6, paragraph 78; figures 2, 4, 8 * | 1-10 | |
| Y | US 2012/235883 A1 (BORDER JOHN N [US] ET AL) 20 September 2012 (2012-09-20) * paragraph [0172]; figures 1, 22, 29 * | 1-10 | TECHNICAL FIELDS SEARCHED (IPC) H04R H04N |

The present search report has been drawn up for all claims

| Place of search | Date of completion of the search | Examiner |
|---|---|---|
| Munich | 3 May 2019 | Duffner, Orla |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 4847

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2019

| Patent document cited in search report | | Publication date | Patent family member(s) | | Publication date |
|---|---|---|---|---|---|
| CN 206585725 | U | 24-10-2017 | NONE | | |
| US 2016123758 | A1 | 05-05-2016 | US | 2016123758 A1 | 05-05-2016 |
| | | | US | 2018048950 A1 | 15-02-2018 |
| US 2016309134 | A1 | 20-10-2016 | CN | 108307675 A | 20-07-2018 |
| | | | EP | 3286914 A1 | 28-02-2018 |
| | | | KR | 20170139098 A | 18-12-2017 |
| | | | US | 2016309134 A1 | 20-10-2016 |
| | | | WO | 2016172125 A1 | 27-10-2016 |
| US 2017064456 | A1 | 02-03-2017 | US | 2017064456 A1 | 02-03-2017 |
| | | | WO | 2017034717 A1 | 02-03-2017 |
| US 2012235883 | A1 | 20-09-2012 | NONE | | |

EPO FORM P0459

For more details about this annex : see Official Journal of the European Patent Office, No. 12/82

**EP 3 591 992 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201821059614